**Europäisches Patentamt**

**European Patent Office**

**Office européen des brevets**

(11) Veröffentlichungsnummer: **0 283 641**

**A1**

# EUROPÄISCHE PATENTANMELDUNG

(21) Anmeldenummer: **88100366.9**

(22) Anmeldetag: **13.01.88**

(51) Int. Cl.⁴ **A47J 37/08**

(30) Priorität: **24.03.87 DE 3709572**

(43) Veröffentlichungstag der Anmeldung:
**28.09.88 Patentblatt 88/39**

(84) Benannte Vertragsstaaten:
**AT CH DE FR GB LI NL**

(71) Anmelder: **Braun Aktiengesellschaft**
**Rüsselsheimer Strasse 22**
**D-6000 Frankfurt/Main(DE)**

(72) Erfinder: **Möthrath, Georg**
**Waldstrasse 5**
**D-6467 Hasselroth(DE)**

(54) **Aufsatz für einen Brotröster.**

(57) Der Aufsatz (2) für einen Brotröster (1) weist ein Tragteil (15) für das Backgut und ein im Wärmekontakt mit der Röstkammer (10) stehendes, wasseraufnehmendes Element (19) auf, welches nach vorheriger Wasseraufnahme bei Erhitzung durch die Heizeinrichtung (5, 6) Wasserdampf (Z) abgibt, der zum Backgut (18) geleitet wird.

# FIG.1

EP 0 283 641 A1

## Aufsatz für einen Brotröster

Die Erfindung betrifft einen Aufsatz für einen Brotröster zum Aufbacken von bereits vor längerer Zeit fertiggestelltem Backgut, insbesondere von altbackenem oder tiefgefrorenem Brot, beispielsweise in Form von Scheiben oder Brötchen.

Ein derartiger Aufsatz ist aus dem DE-GM 82 03 183 bekannt, der aus einem unmittelbar über dem Röstraum angebrachten Drahtgestell besteht. Die Funktionsweise der dort beschriebenen Anordnung besteht darin, daß nach Inbetriebnahme des Brotrösters die von seiner elektrischen Heizvorrichtung erzeugte Heißluft durch einen zur Einbringung und Herausnahme des Röstgutes im Gehäuse des Brotrösters angebrachten Schlitz aus dem Röstraum aufsteigt und das Backgut umströmt. Weiterhin wird die dem Röstraum zugewandte Seite des Backgutes auch noch durch die aus dem Schlitz austretende Wärmestrahlung erwärmt.

Ein Nachteil der bekannten Anordnung besteht darin, daß das Backgut auf seiner Oberfläche sehr unterschiedlich erwärmt wird, da Teile seiner Oberfläche nur durch Heißluft und andere Teile zusätzlich noch durch intensive Wärmestrahlung erwärmt werden. Dies führt dazu, daß das Backgut - obwohl insgesamt noch nicht genügend aufgebacken - an der dem Röstraum zugewandten Seite verkohlt werden kann. Dieser Nachteil tritt besonders bei tiefgefrorenem Backgut zutage, da hier über die Oberfläche größere Wärmemengen in das Innere des Backgutes transportiert werden müssen als beispielsweise beim Aufbacken von altbackenem Backgut. So tritt hier nicht selten der Fall ein, daß das Backgut in seinem Inneren teilweise noch nicht einmal aufgetaut, außen aber bereits verkohlt ist.

Ein weiterer Nachteil besteht darin, daß altbackenes Backgut bei den bekannten Brotröstern mit Aufsatz einen hohen Anteil des nach längerer Lagerung ohnehin nur noch geringen Anteils an freiem Wasser verliert. So werden beispielsweise bei etwa einem Tag alten Brötchen beim Aufbacken im Mittel 2-3 Gramm Wasser verloren.

Das hat zur Folge, daß das Backgut zwar wieder aufgewärmt wird, aber noch spröder und trockener wird als es bereits in altbackenem Zustand war.

Aufgabe der Erfindung ist es daher, einen Aufsatz für einen Brotröster anzugeben, der es ermöglicht, altbackenes oder tiefgefrorenes Backgut derart aufzubacken, daß es außen nicht verkohlt und so gleichmäßig wie möglich aufgewärmt wird und bei dem das Backgut während des Aufbackvorgangs möglichst wenig an freiem Wasser verliert.

Diese Aufgabe wird für einen Aufsatz nach dem Oberbegriff des Patentanspruchs 1 durch die im kennzeichnenden Teil dieses Patentanspruchs angegebenen Merkmale gelöst.

Dabei ist es vorteilhaft, wenn der Aufsatz für einen auf seiner Oberseite mit einem oder mehreren Schlitzen zur Einbringung eines Röstgutes in die Röstkammer versehenen Brotrösters ein Tragteil in Form eins auf die Oberseite des Brotrösters aufsetzbaren Rahmens aufweist und wenn das wasseraufnehmende Element aus mindestens einem an seiner Oberseite zumindest teilweise offenen Behälter besteht, der über einem Schlitz liegend angebracht ist oder ganz oder teilweise in diesen eingreift (Anspruch 2).

Vorteilhafterweise wird zur leichteren Handhabbarkeit des Wasser enthaltenden Behälters dieser zur Speicherung des Wassers mit einem Wasser gut absorbierenden Material ausgekleidet (Anspruch 3).

Nach einer zusätzlichen Weiterbildung der Erfindung (Anspruch 4) besteht das Wasser absorbierende Material aus einem aus Aluminiumoxid und Siliziumoxid bestehenden Keramikvlies, das sich nach einer weiteren bevorzugten Ausführungsform (Anspruch 6) in auf ihren Außenflächen brünierten Behältern befindet. Gemäß einer ebenfalls vorteilhaften Ausführungsform der Erfindung (Anspruch 5) weisen der Boden und/oder die Seitenwände der oben offenen Behälter Öffnungen auf, aus denen bei Erhitzung der Behälter zusätzlich Wasserdampf entweichen kann.

Bei dem erfindungsgemäßen Aufsatz wird ein mit Wasser oder mit einem dieses gut absorbierenden Material gefüllter Behälter sowohl von Heißluft als auch mit Wärmestrahlung beaufschlagt. Nach kurzer Aufheizzeit wird die Verdunstung deutlich größer als die natürliche Verdunstung, womit der Energietransport vom Brotröster zum Backgut beginnt. Erreicht das freie oder im absorbierenden Material gebundene Wasser durch weitere Aufheizung schließlich die Verdampfungstemperatur von etwa 100°C, setzt die Verdampfung des Wassers ein, und das Backgut wird nun von Dampf umströmt.

Durch den erfindungsgemäßen Aufsatz kann altbackenes Backgut mit geringem Wasserverlust (weniger als 0,3 g bei Brötchen in handelsüblicher Größe von etwa 40 - 50 g) und ohne verbrannte Stellen schonend aufgewärmt oder aufgebacken werden. Ebenso kann auch bei tiefgefrorenem Backgut, ohne daß verbrannte Stellen entstehen, durch mehrmaliges Wenden des Backgutes ein völliges Auftauen erreicht werden.

Nachfolgend wird die Erfindung anhand der Zeichnung eines Ausführungsbeispiels näher erläutert. Es zeigt:

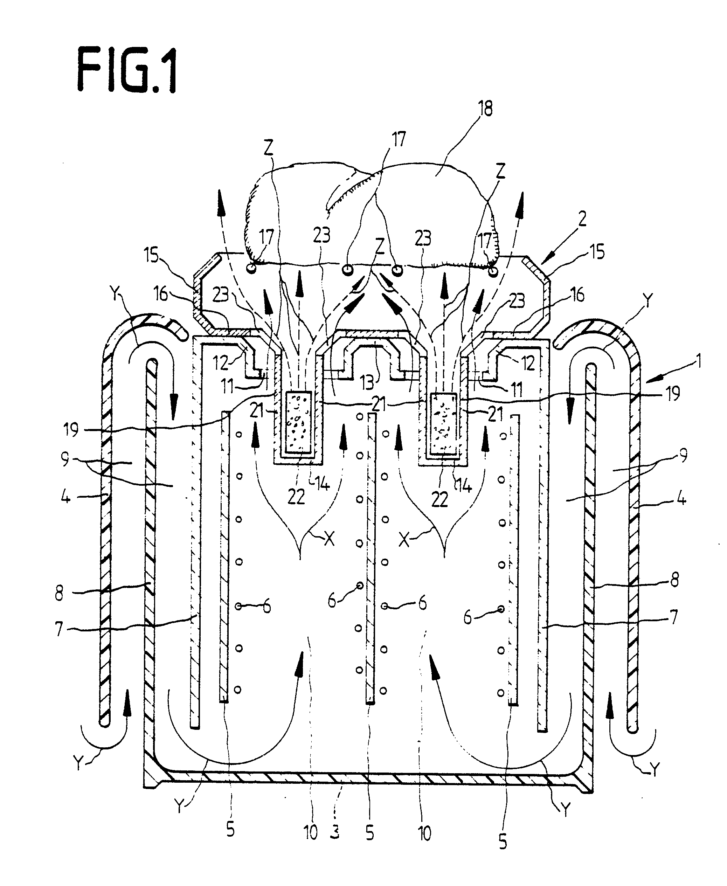

Fig. 1 einen Brotröster mit einem an diesen angepaßten erfindungsgemäßen Aufsatz im Schnitt,

In Fig. 1 ist ein Brotröster 1 dargestellt, der einen Aufsatz 2 trägt. Das Gehäuse des Brotrösters 1 besteht dabei im wesentlichen aus einem U-förmig gebogenen Teil 3 mit seinen beiden Schenkeln 8 und zwei Seitenwänden 4, die an ihrem oberen Ende halbkreisförmig zum Inneren des Brotrösters hin gebogen sind. Der Brotröster weist in seinem Inneren drei Träger 5 aus wärmeisolierendem Material auf, von denen die beiden äußeren Träger nur auf ihrer nach innen gerichteten Seite mit Heizleitern 6 versehen sind, während der in der Mitte angebrachte Träger 5 auf beiden Seiten Heizleiter 6 aufweist.

Zwischen den beiden äußeren Trägern 5 und dem dazugehörigen Schenkel 8 des U-förmig gebogenen Teils 3 ist jeweils ein Reflektor 7, der die seitliche Begrenzung einer durch die Heizleiter 6 beheizten Röstkammer 10 bildet, für die von den Heizleitern 6 erzeugte Wärmestrahlung angebracht.

Sowohl das U-förmig gebogene Teil 3 als auch die Seitenwände 4, die Träger 5 und die Reflektoren 7 werden an nicht gezeigten Stirnwänden des Brotrösters 1 gehaltert.

Wie aus der Fig. 1 ersichtlich, bilden die Seitenwände 4, die Reflektoren 7 und jeweils ein Schenkel 8 des U-förmig gebogenen Teils 3 je einen Kanal 9, in dem, wie durch Strömungspfeile Y angedeutet, Luft von außen in die Röstkammer 10 gelangen kann und nach deren Aufheizung, wie ebenfalls durch Strömungspfeile, d. h. "X", angedeutet, aus zwei an der Oberseite des Brotrösters 1 ausgebildete Schlitze 11 wieder austritt.

Wie aus der Figur ersichtlich, werden die Schlitze 11 aus den den beiden Reflektoren 7 angeformten Sichtblechen 12 und einem Mittelsteg 13 gebildet, der an seinen beiden Enden im Bereich der Stirnwände jeweils in einen die beiden Sichtbleche 12 miteinander verbindenden Blechteil (nicht dargestellt) übergeht.

Der Aufsatz 2 besteht im wesentlichen aus einem in der Draufsicht rechteckförmigen Rahmen 15, der an seiner Unterseite zwei abgewinkelte Auflageflächen 16 aufweist, die auf den beiden Sichtblechen 12 aufliegen und dadurch den Aufsatz 2 auf dem Brotröster 1 tragen. Der Aufsatz 2 weist an seiner Oberseite mehrere Gitterstäbe 17 auf, die in den beiden Schmalseiten (nicht dargestellt) des Rahmens 15 verankert sind und die dem Backgut 18 eine Auflagefläche bieten.

Der Aufsatz 2 ist zweckmäßigerweise durch in der Zeichnung nicht dargestellte Mittel, beispielsweise durch eine oder mehrere geeignet ausgebildete, lösbare Klammern, gegen ein Herunterfallen gesichert.

Wie aus der Figur weiter ersichtlich, schließen sich an den Rahmen 15 des Aufsatzes 2 im Bereich der Schlitze 11 in die Röstkammern 10 hineinragende, im Querschnitt rechteckförmige Behälter 19 an. Durch die in der Röstkammer 10 angebrachten Heizleiter 6 können die Behälter 19 durch Konvektion und Wärmestrahlung aufgeheizt werden.

Die Behälter 19 sind mit einem Wasser gut aufnehmenden Material, beispielsweise einem Keramikvlies 22, ausgekleidet und auf ihrer Außenseite zur Erzielung eines großen Absorptionsvermögens für die aus der Röstkammer 10 austretende Wärmestrahlung brüniert. Das Keramikvlies 22 besteht aus einer Mischung von Aluminiumoxid ($Al_2O_3$) und Siliziumoxid ($SiO_2$), wobei bei einem Mischungsverhältnis von 99% zu 1% ($Al_2O_3$ zu $SiO_2$) das Keramikvlies Wasser bis zu etwa 85% seines Volumens aufnehmen kann. Sowohl der Boden 14 als auch die Seitenwände 21 der Behälter 19 sind mit in der Figur nicht dargestellten Austrittsöffnungen für den beim Aufheizen des in den Behältern 19 im Keramikvlies 22 gebundenen Wassers ausströmenden Wasserdampf vorgesehen.

Zwischen der Auflagefläche 16 und dem Steg 13 weist der Aufsatz 2 im Bereich über den Behältern 19 jeweils zwei Austrittsschlitze 23 für den aus den Austrittsöffnungen der Behälter 19 entweichenden Wasserdampf auf. Der direkt von den oben offenen Behältern bei deren Erhitzung durch im Brotröster 1 vorhandenen Schlitze 11 austretende Wasserdampfstrom ist in der Figur mit dem Bezugszeichen Z versehen.

Wird nun bei auf den Gittestäben 17 aufliegendem, altbackenem Backgut 18 und mit Wasser aufgefüllten Behältern 19 die Heizung 5, 6 des Brotrösters eingeschaltet, so tritt neben dem über die Austrittsschlitze 23 entweichenden Warmluftstrom X nach einiger Zeit aus dem oben offenen Behälter ein das Backgut umströmender Wasserdampfstrom Z aus. Zusätzlich wird dem Backgut wiederum über die Austrittsschlitze 23 der aus dem Boden 14 und den Seitenwänden 21 der Behälter 19 austretende Wasserdampf zugeführt.

Durch die Zufuhr von Wasserdampf wird das altbackene Backgut 18 äußerst schonend und ohne verbrannte Stellen wieder aufgebacken, wobei es nur einen geringfügigen Wasserverlust erleidet.

Nach erfolgtem Aufbacken des Backgutes 18 kann der Brotröster 1 nach Abnahme des Aufsatzes 2 wieder in herkömmlicher Weise zum Rösten von Brot verwendet werden. 1 Brotröster

2 Aufsatz

3 U-förmig gebogenes Blech

4 Seitenwände 4

5 Träger aus Isolierstoff 5

6 Heizleiter

7 Reflektor

8 Schenkel des U-förmigen Bleches
9 Kanal
10 Röstkammer
11 Schlitze
12 Sichtbleche
13 Mittelsteg
14 Boden des Behälters
15 Rahmen
16 Auflagefläche
17 Gitterstäbe
18 Backgut
19 Behälter
21 Seitenwände des Behälters
22 Keramikvlies
23 Austrittsschlitze für Heizluft X und gegebenenfalls für Wasserdampf (wenn Löcher im Boden/Seitenwänden des Behälters 19)
X Heißluftstrom aus den Röstkammern 10
Y Zuluftstrom in den Kanälen 9
Z Wasserdampfstrom direkt aus den Behältern 19 austretend

**Ansprüche**

1. Aufsatz für einen Brotröster zum Aufwärmen, Aufbacken oder Auftauen von bereits vor längerer Zeit fertiggestelltem Backgut mittels einer in einer Röstkammer des Brotrösters angebrachten Heizeinrichtung ,
**dadurch gekennzeichnet,**
daß der Aufsatz (2) ein Trageteil (15) für das Backgut (18) und ein in Wärmekontakt mit der Röstkammer (10) stehendes, wasseraufnehmendes Element (19) aufweist, welches nach vorheriger Wasseraufnahme bei Erhitzung durch die Heizeinrichtung (5, 6) Wasserdampf (Z) abgibt, der zum Backgut (18) geleitet wird.

2. Aufsatz nach Anspruch 1 für einen Brotröster, der auf seiner Oberseite einen oder mehrere Schlitze (11) zur Einbringung eines Röstgutes in die Röstkammer (10) aufweist,
**dadurch gekennzeichnet,**
daß das Trageteil aus einem auf der Oberseite des Brotrösters (1) anbringbaren Rahmen (15) besteht und daß das wasseraufnehmende Element aus einem oder mehreren an ihrer dem Rahmen (15) angewandten Seite zumindest teilweise offenen Behältern (19) besteht, der mit dem Rahmen (15) mechanisch verbunden ist, wobei die Behälter (19) über den Schlitzen (11) liegend angebracht sind oder ganz oder teilweise in die Schlitze (11) eingreifen.

3. Aufsatz nach Anspruch 2
**dadurch gekennzeichnet,**
daß der Innenraum des Behälters (19) mit einem Wasser gut absorbierenden Material (22) ausgekleidet ist.

4. Aufsatz nach Anspruch 3,
**dadurch gekennzeichnet,**
daß das Wasser gut absorbierende Material (22) aus einem Keramikvlies, beispielsweise aus einer Mischung von Aluminiumoxid und Siliziumoxid, besteht, wobei der Anteil an Aluminiumoxid bis zu etwa 99% betragen kann.

5. Aufsatz nach Anspruch 3 oder 4,
**dadurch gekennzeichnet,**
daß der Behälter (19) an seinem Boden (14) und/oder seinen Seitenwänden (21) Öffnungen für den Austritt von Wasserdampf aufweist.

6. Aufsatz nach Anspruch 3, 4 oder 5,
**dadurch gekennzeichnet,**
daß der Behälter (19) aus einem auf seinen Außenflächen brünierten Material besteht, welches die auf den Behälter auftretende Wärmestrahlung zu einem großen Anteil absorbieren kann.

# FIG.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 659 295 (SOCCOLI)<br>* Spalte 1, Zeilen 1-10; Spalte 2, Zeilen 18-23; Figuren *<br>--- | 1,2 | A 47 J 37/08 |
| A | US-A-1 344 326 (WILLIAMS)<br>* Seite 1, Zeilen 65-77; Seite 2, Zeilen 22-46; Figuren *<br>--- | 3,5 | |
| A | FR-A-2 222 980 (FISSLER)<br>* Insgesamt *<br>--- | 3-5 | |
| A | US-A-3 046 971 (HOGSHIRE)<br>* Insgesamt *<br>--- | 1 | |
| A | US-A-4 197 791 (VIECELI et al.)<br>* Figuren *<br>--- | 1 | |
| A | CH-A- 108 694 (REHMANN & CO.)<br>* Figur *<br>--- | 1 | RECHERCHIERTE SACHGEBIETE (Int. Cl.4) |
| A,D | DE-U-8 203 183 (ROWENTA)<br>----- | | A 47 J |

Der vorliegende Recherchenbericht wurde für alle Patentansprüche erstellt

| Recherchenort | Abschlußdatum der Recherche | Prüfer |
|---|---|---|
| DEN HAAG | 04-07-1988 | GAIC P.M.Z. |

EPO FORM 1503 03.82 (P0403)